# EUROPEAN PATENT SPECIFICATION

(11) **EP 2 744 757 B1**
(45) Date of publication and mention of the grant of the patent: **06.03.2019**
(21) Application number: 12759847.2
(22) Date of filing: 16.08.2012
(51) Int. Cl.: C02F 1/68, C02F 1/76

(54) **CHEMICAL FEEDER INCLUDING DILUTION CONTROL SYSTEM**
CHEMISCHE ZUFÜHREINHEIT MIT VERDÜNNUNGSREGELUNGSSYSTEM
DISPOSITIF D'ALIMENTATION EN PRODUITS CHIMIQUES COMPRENANT UN SYSTÈME DE COMMANDE DE DILUTION

(30) Priority: 19.08.2011 US 201161525446 P
(43) Date of publication of application: 25.06.2014
(73) Proprietor: Arch Chemicals, Inc., Atlanta, GA 30328 (US)
(72) Inventor: ADAMS, Zachary Harris, Marietta, Georgia 30067 (US)
(74) Representative: Pizzoli, Antonio
(86) International application number: PCT/US2012/051166
(87) International publication number: WO 2013/028464

(56) References cited:
- WO-A1-03/066534
- US-A- 5 268 153
- US-A1- 2005 145 277
- US-A1- 2009 324 747
- US-A1- 2010 226 835

## Description

### FIELD OF THE INVENTION

This invention relates to water treatment, and more particularly to an apparatus for introducing dry chemicals into a water stream where the chemicals are dissolved in the water at a concentration that is widely selectable depending on the application of the treated water.

### BACKGROUND OF THE INVENTION

Water treatment is needed in a variety of applications. Untreated water provides a hospitable environment for the growth of bacteria, algae, and other undesirable and potentially unhealthful organisms. It has become common practice to treat water on a periodic or continuous basis by introducing chemicals to control such organisms.

Chemical feeders have been developed to bring water into contact with solid, dry chemicals, such as calcium hypochlorite, to treat water so that the solid chemical material is dissolved in the water at a controlled rate. For example, when calcium hypochlorite is used to introduce chlorine into a water stream, the quantity of chlorine in the water is generally expressed as a concentration of free available chlorine (FAC). Thus, in order to be effective, the feeder must be able to dissolve the calcium hypochlorite at a desired rate and to maintain a desired FAC concentration, while avoiding undesirable deposits, such as calcium carbonate, or residues of calcium hypochlorite.

In a typical feeder, solid chemicals (e.g., tablets, briquettes, pellets) are held in a hopper of the feeder and the chemicals are dissolved by directing an intermittent spray of pressurized water toward the solid chemicals from below the hopper. The intermittent spray of water provides a timed duration of wetted contact with the chemicals to dissolve the solid chemical material and create a concentrated chemical solution. At a later point in time, when the pressurized water spray is turned back on, the chemical residue is washed off of the surface of the solid chemical and the surface of the hopper, to create a high concentration of the chemical solution. In the case of calcium hypochlorite, the concentration is generally between 1.5% and 2.0%. However, chemical feeders used for applications with a high chemical concentration can require regular maintenance due to system fouling and can result in a chemical solution that has a concentration that is higher than desired. An example of an intermittent spray system is disclosed in U.S. Pat. No.: 5,928,608. Moreover, US 5268153 A discloses a chemical feeder in which water is sprayed from a nozzle upwardly toward chemical in a capsule within a hopper, while WO 03/066534 A1 and US 2005/145277 A1 describe chemical feeders in which water is sprayed upwardly towards a grid retaining a solid chemical to be dissolved within a hopper.

Although a high concentration of a chemical solution using spray technology is advantageous in many applications, there are other applications where it is more desirable to produce a chemical solution at a lower concentration. However, similar to the methods used to create a high concentration of a chemical solution, these methods often do not yield predictable concentrations and typically result in producing varying concentrations of a chemical solution.

It is therefore desirable to implement a chemical feeder where the strength of the chemical solution can be controlled to deliver a determinable chemical concentration into a water stream such that the chemical feeder can be utilized in a variety of applications.

### SUMMARY OF THE INVENTION

The present invention relates generally to a chemical feeder which includes a dilution control device. More specifically, the present invention relates to a manually operated bypass line that extends from an inlet water supply line into a chemical solution preparation unit of a chemical feeder. In addition to a manifold, which is arranged in the chemical solution preparation unit and sprays water toward solid chemicals located in a hopper of the chemical feeder above the chemical solution preparation unit, the dilution control device, or the bypass line, sprays water, in an opposite direction of the manifold, toward the bottom of the chemical solution preparation unit. The water spray from the manifold and the water spray from the dilution control device mix with the dissolved chemical in the bottom of the unit to create a chemical solution with a concentration that has widely selectable strength depending on the desired application of the solution. The desired concentration of the solution is achieved by varying the water pressure of the manifold and/or the dilution control device; in essence, adjusting the ratio of water pressure entering the manifold and the dilution control device. Thus, the dilution control device allows the feeder to produce chemical solutions consistently at a specified solution strength depending on the application of the chemical solution. For example, a desired concentration of a chemical solution will differ for a spa facility as opposed to a drinking water plant or a post-harvest wash for fruit and vegetables. Therefore, as a result of the dilution control device, chemical feeders are not limited to either a high or low chemical concentration that in turn limits the application of the feeder. Moreover, the dilution control device also aids in cleaning the unit from any reside of the chemical solution that may remain in the base of the unit.

Broadly, the present invention relates to a chemical feeder according to claim 1, which comprises a pump, a water supply line that extends from the pump, a chemical solution preparation unit that includes a reservoir and a dissolution device that is connected to the water supply line and disposed above the reservoir and a hopper. The dissolution device includes a spray manifold directed to spray water away from a base of the reservoir and a dilution control device which has a water line that is configured to spray water in a direction opposite the manifold and toward the base of the reservoir. The hopper, which includes a container and a grid positioned within the container, is arranged on the chemical solution preparation unit such that the spray manifold is directed to spray water toward the grid of the hopper to dissolve solid chemicals that are arranged in the hopper.

The spray manifold has a main body that extends parallel to the water line of the dilution control device. Additionally, the spray manifold has a first arm that extends in a first direction from the main body of the manifold and a second arm that extends in a second direction from the main body of the manifold. The spray manifold has a first nozzle disposed at a distal end of the main body, a second nozzle that is disposed at a distal end of the first arm a third nozzle that is disposed at a distal end of the second arm. The first nozzle, the second nozzle and the third nozzle of the manifold are each directed away from the base of the reservoir and toward the hopper. Also, the dilution control device has a nozzle at an end thereof that sprays water toward the base of the reservoir.

The chemical feeder also includes a first inlet line that extends from the water supply line and is connected to the spray manifold and a second inlet line that extends from the water supply line and is connected to the dilution control device. To ensure proper system functionality, the water supply line is configured to provide equal water pressure to the first inlet line and the second inlet line. Moreover, the chemical feeder can further include a first check valve, which is connected to the first inlet line and a second check valve that is connected to the second inlet line. The second check valve is adapted to control the water pressure of the dilution control device such that an adjustment of the second check valve changes water flow from the dilution control device into the reservoir and thereby adjusts the concentration of the chemical solution.

Additionally, the present invention relates to a method according to claim 9 for treating water via a chemical feeder that comprises a pump, a water supply line, which extends from the pump, a chemical solution preparation unit that has a reservoir, a dissolution device which is connected to the water supply line that includes a spray manifold directed to spray water away from a base of the reservoir and a dilution control device which has a water line that is configured to spray water in a direction opposite the manifold and toward the base of the reservoir, and a hopper arranged on the chemical solution preparation unit. The method includes the steps of inserting solid chemical products in the hopper of the chemical feeder, pumping water from the pump through a water supply line that is connected to a first line and a second line that extend into the chemical solution preparation unit, adjusting a pressure of the water via a first valve associated with the first line and a second valve associated with the second line, the first and second valves being check valves or solenoid valves, spraying water toward the hopper from the manifold that extends from the first line into the reservoir to dissolve the solid chemical products, spraying water toward the base of the reservoir from the dilution control device, and forming a chemical solution with a solution strength that directly correlates to the pressure of the water being sprayed from the manifold and the dilution control device.

Additional features of the disclosure will be described hereinafter that form the subject of the claims of the disclosure. Those skilled in the art should appreciate that they can readily use the disclosed conception and specific embodiment as a basis for designing or modifying other structures for carrying out the same purposes of the present disclosure as long as such other structures do not depart from the scope of the attached claims.

### BRIEF DESCRIPTION OF THE DRAWINGS

The present invention will be further understood and appreciated by reading the following description in conjunction with the accompanying drawing, in which:
FIG. 1 is a perspective view of a chemical feeder in accordance with an embodiment of the invention showing some of the internal components thereof;
FIG. 2 is another perspective view of the chemical feeder;
FIG. 3 is a partially exploded view of the chemical feeder of FIG. 2, showing a pump unit, a hopper unit and a chemical solution preparation unit of the chemical feeder;
FIG. 4 is a perspective view of the chemical solution preparation unit of the chemical feeder showing internal components thereof, including a spray manifold and a dilution control device;
FIG. 5 is another perspective view of the chemical solution preparation unit of the chemical feeder of FIG. 4;
FIG. 6 is a partially exploded view of the chemical solution preparation unit of FIG. 5 showing components thereof, including the feeder reservoir, the spray manifold and the dilution control device;
FIG. 7 is a perspective view of a hopper unit of the chemical feeder;
FIG. 8 is an exploded view of the hopper unit of FIG. 7;
FIG. 9 is a perspective view of the hopper unit of FIG. 7 showing and underside of the hopper unit; and
FIG. 10 is a perspective view of the hopper unit of FIG. 7 showing the underside of the hopper unit and internal structure thereof.

### DETAILED DESCRIPTION OF THE INVENTION

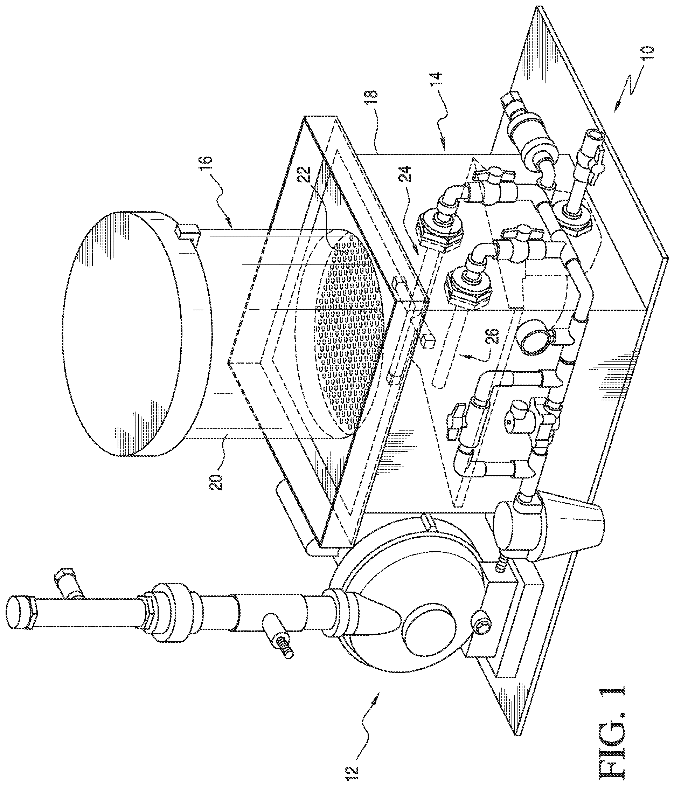

Referring now to the figures, FIG. 1 illustrates a chemical feeder 10 that includes a pump unit 12, a chemical solution preparation unit 14, and a hopper unit 16, which are connected to (i.e., in fluid communication with) each other. The exterior walls 18, 20 of the chemical solution preparation unit 14 and the hopper unit 16 are shown, respectively, as transparent in FIG. 1. As a result of the transparency, a grid 22 for disposing solid chemical material (e.g., tablets, briquettes, pellets, or the like) thereon can be seen along with a spray manifold 24 for spraying water onto the solid chemical material, and a dilution control device 26. Although the chemical feeder 10 herein is shown as containing individual components, the feeder 10 can also be manufactured using a molding process to eliminate the number of components required for the feeder 10.

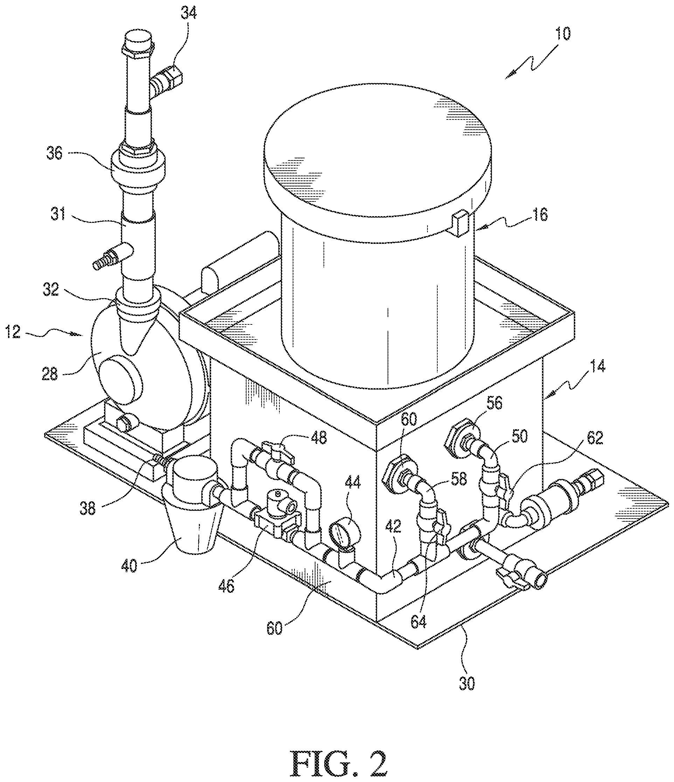

FIG. 2 is a perspective view of the chemical feeder 10. As can be seen in FIG. 2, a pump 28 of the pump unit 12 and the chemical solution preparation unit 14 are installed on a skid 30 and the hopper unit 16 is disposed on top of the chemical solution preparation unit 14.

An inlet line 31 is affixed at one end to an inlet 32 of the pump 28 and at another end, the inlet line 31 is connected to a coupler 34, which may be a quick-connect coupler, via a coupler 36. Water enters the chemical feeder 10 via a feed line (not shown) that is connected to the coupler 34 and water is discharged from the pump 28 via a discharge line (not shown) to a connector 38.

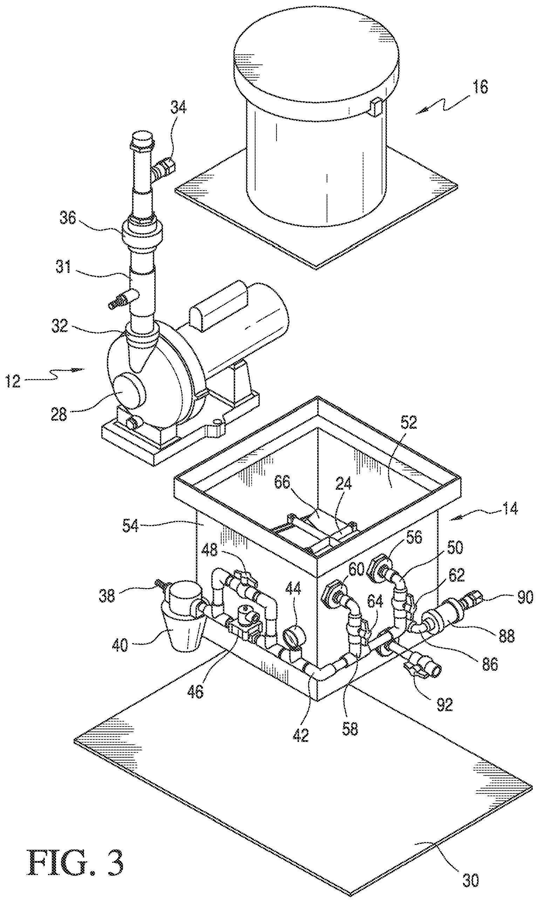

The water that is discharged from the pump 28 may be conducted through a strainer 40 to a feed line 42. The feed line 42 may have a pressure gauge 44 and an inline solenoid valve 46, which may be bypassed using a manual valve 48. The feed line 42 connects to a first line 50, which extends to an interior 52 (FIG. 3) of a housing 54 (FIG. 3) of the chemical solution preparation unit 14, through a first bulkhead connector 56 and the feed line 42 also connects to a second line 58, which branches from the feed line 42, to into the interior 52 (FIG. 3) of the housing 54 (FIG. 3) of the chemical solution preparation unit 14 through a second bulkhead connector 60. The first line 50 and the second line 58 each have manual valves 62, 64, respectively. The valves 62, 64, which may be ball valves, aid in controlling the water pressure that flows through the first line 50 and the second line 58, respectively.

FIG. 3 is a partially exploded view of the chemical feeder 10 of FIG. 2. In FIG. 3, aspects of the interior 52 of the chemical solution preparation unit 14 can be seen, such as the spray manifold 24 and a feeder reservoir 66.

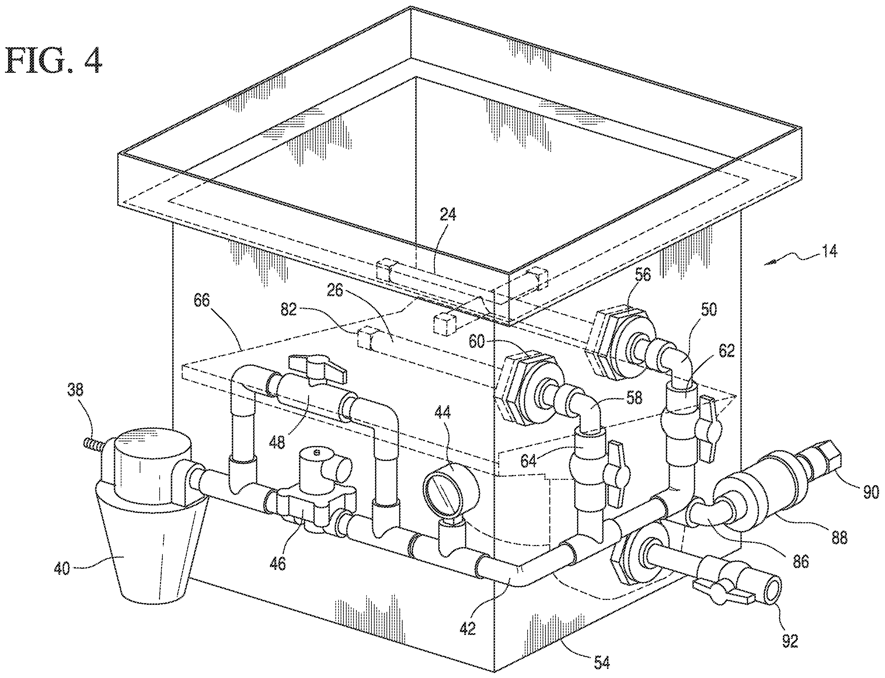

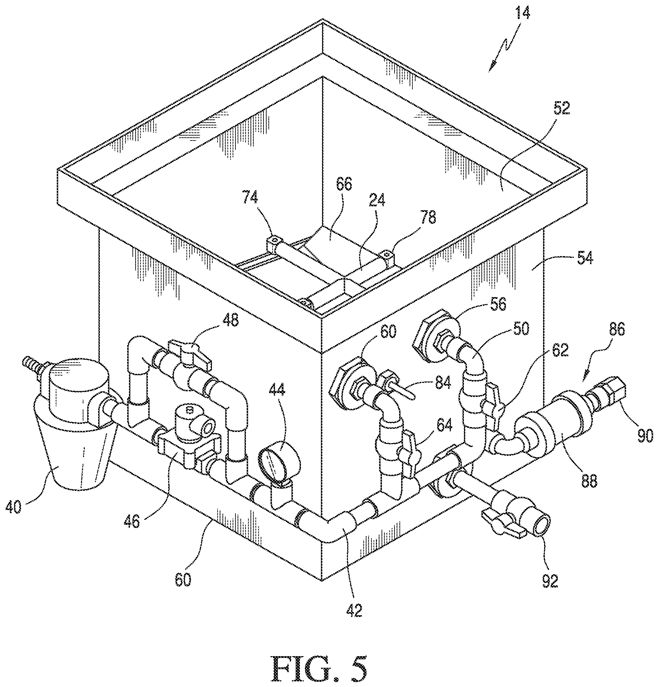

FIGS. 4 and 5 are perspective views of the chemical solution preparation unit 14. In FIG. 4, the housing 54 is shown as transparent, so that spray manifold 24, the dilution control device 26 and the feeder reservoir 66 are visible. The spray manifold 24 extends from the first bulkhead connector 56, which is affixed to the first line 50, into the housing 54 of the chemical solution preparation unit 14 and the dilution control device 26 extends from the second bulkhead connector 60, which is affixed to the second line 58, into the housing 54 of the chemical solution preparation unit 14.

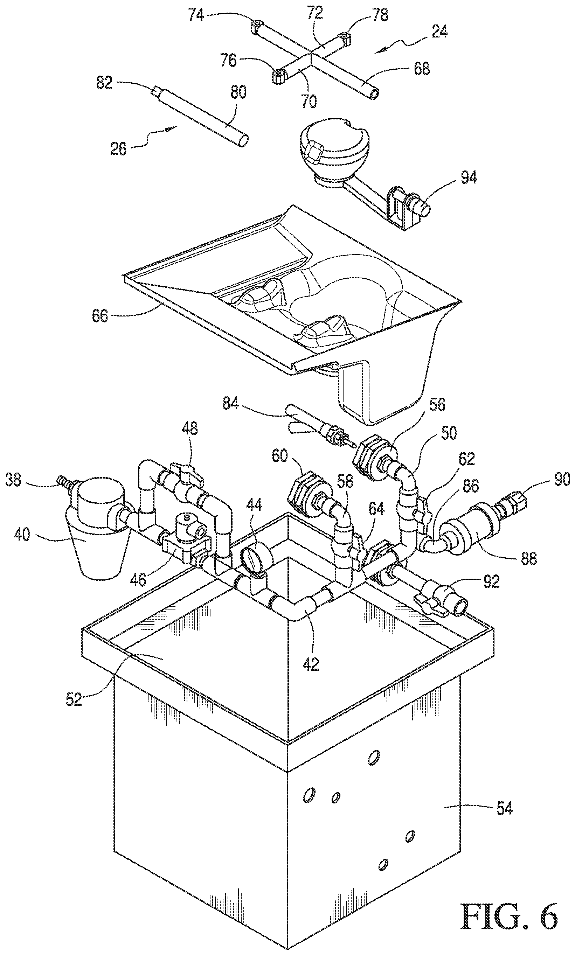

FIG. 6 is a partially exploded view of the chemical solution preparation unit 14, showing additional details of the spray manifold 24 and the dilution control device 26. In this embodiment, the spray manifold 24 is cross-shaped. The spray manifold 24 has an elongated main body 68 that extends from the first bulkhead connector 56 and two arms 70, 72, which protrude at right angles from the main body 68. The first arm 70 extends in a first direction from the main body 68 and the second arm 72 extends in a second direction, which is opposite the first direction from the main body 68. A spray nozzle 74, which is directed upward toward the hopper unit 16, is arranged at the end of the main body 68. Also, spray nozzles 76, 78 are arranged at the ends of each of the arms 70, 72, respectively, for spraying water toward the grid 22 of the hopper unit 16. When in use, the solid chemicals dissolve and fall through the grid 22 and into the feeder reservoir 66 that is disposed in the lower part of the housing 54.

The dilution control device 26 is a manually operated, water line 80 that extends from the feed line into the interior 52 of the housing 54, parallel to the main body 68 of spray manifold 24. The water line 80 has a spray nozzle 82 that is arranged at the end thereof. The nozzle 82 of the dilution control device 26 is designed to spray at a rate that ensures a desired water pressure is maintained between the spray manifold 24 and the dilution control device 26 so that there is not a pressure loss over the system. The nozzle 82 is directed downwards towards the feeder reservoir 66. Hence, the direction of the nozzles 74, 76, 78 of the spray manifold 24 and the direction of the nozzle 82 of the dilution control device 26 are directed away from each other with the dilution control device 26 spraying water toward the base of the feeder reservoir 66 at the same time that the spray manifold 24 sprays water toward the hopper unit 16 to contact and dissolve the solid chemical material. Accordingly, two streams of water collect and mix in the reservoir 66, a solution of the dissolved chemical material (e.g., calcium hypochlorite), and a water stream from the dilution control device 26.

It should be noted that the chemical solution preparation unit 14 also includes an overflow switch 84, and that the chemical solution is conducted out of the reservoir 66 via a discharge valve 94 that connects to a discharge line 86, which has a check valve 88 and a coupler 90, which may be a quick connect coupler, that is used to connect the discharge line 86 to the water system that is being treated. Also, if necessary, the interior 52 of the housing 54 may be drained via a valve 92.

By adjusting the water pressure via the first valve 62 and the second valve 64, the dilution control device 26 permits the strength of the water treatment solution to be controlled in a consistent and predictable manner to meet the needs of various customers. As can be seen in the figures, the first line 50 and the second line 58 have the same construction. Moreover, the same inlet supply pressure is present at both the spray manifold 24 and dilution control device 26. At a given supply pressure (e.g., 310 kPa (45 psi)), the flow from spray nozzles 74, 76, 78 of the spray manifold 24 will cause dissolution of the chemical material. Flow from spray nozzle 82 of the dilution control device 26, is adjustable by opening or closing the second valve 64 to aid in diluting the solution, such that the solution will have a concentration that falls within a desired range. By partially closing the valve 64, water flow into the water line 80 and through the nozzle 82 is reduced, thereby increasing the solution strength in a controlled fashion. Alternatively, the opening of the second valve 64 results in an increased flow of water into water line 80 and through the nozzle 82, which in turn dilutes the strength of the solution.

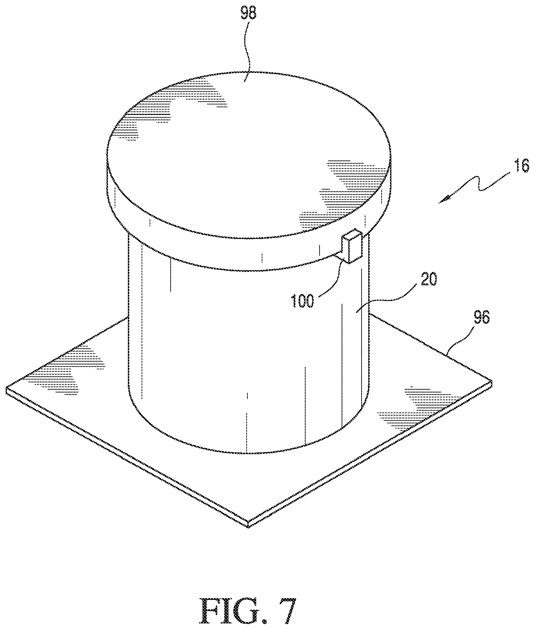

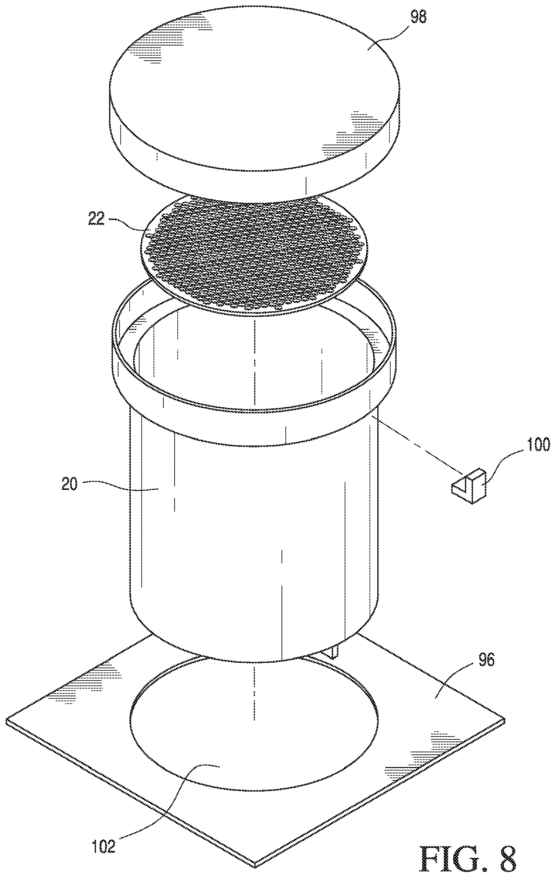

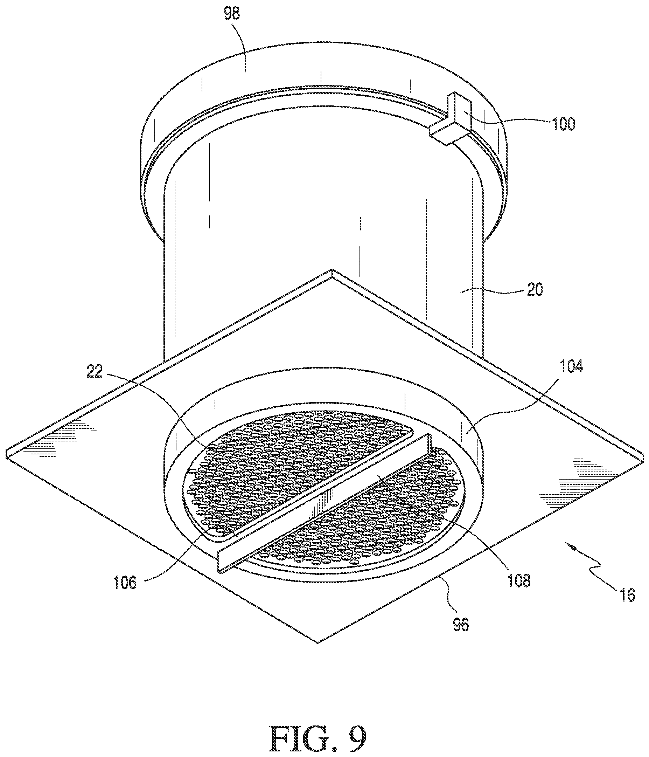

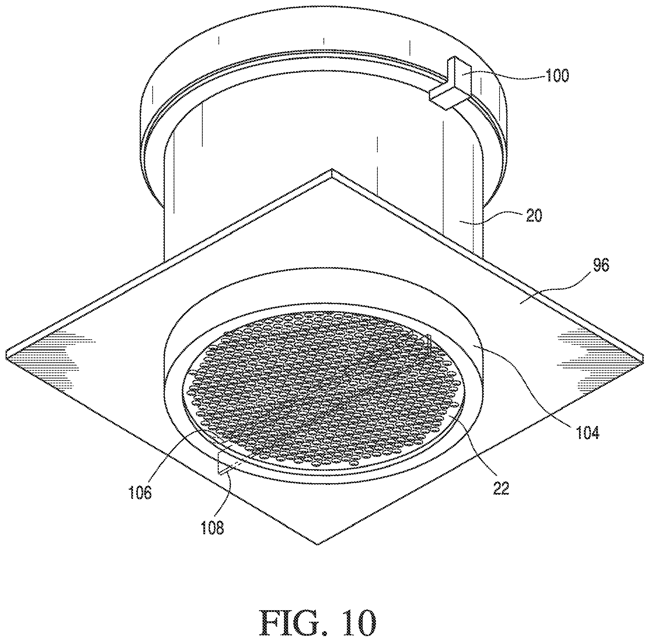

Details of the hopper unit 16 of the chemical feeder 10 are shown in FIGS. 7-10. FIG. 7 is a perspective view of the exterior of the hopper unit 16. In this embodiment, a cylindrical sidewall 20 of the hopper unit 16 is attached to a plate 96, which covers the top of the housing 54 of the unit 14. The hopper unit 16 also has a lid 98 and a lid switch 100, which secured the lid 98 on the hopper unit 16. As shown in FIG. 8, the plate 96 has a central hole 102 with a circumference that is approximately the same as the circumference of the cylindrical sidewall 20. The grid 22 of the hopper unit 16 covers the central hole 102 of the plate 96. FIGS. 9 and 10 illustrate other perspective views of the hopper unit 16. As shown in FIGS. 9 and 10, a circular flange 104 extends from the circular hole 102 formed in the plate 96, and the circular flange 104 has a crossbar 106 that traverses the circular hole 102. The circular flange 104 and the crossbar 106 aid in ensuring the grid 22 is secured in the hopper unit 16. Additionally, a protrusion 108 extends from the crossbar 106.

The chemical feeder 10 embodying the disclosure herein can deliver chemical solutions in a range of concentrations, which allows the chemical feeder 10 to be used in a wide variety of applications. While the disclosure has been described in terms of specific embodiments, it is evident in view of the foregoing description that numerous alternatives, modifications and variations will be apparent to those skilled in the art. Accordingly, the disclosure is intended to encompass all such alternatives, modifications and variations which fall within the scope of the following claims.

## Claims

1. A chemical feeder (10), comprising:
a pump (12);
a water supply line (42) extending from the pump (12);
a chemical solution preparation unit (14) having a reservoir (66) and a dissolution device connected to the water supply line (42) and disposed above the reservoir (66), wherein the dissolution device includes a spray manifold (24) directed to spray water away from a base of the reservoir (66) and a dilution control device (26) having a water line (80) which is configured to spray water in a direction opposite the spray manifold (24) and toward the base of the reservoir (66);
a hopper (16), which includes a container (20) and a grid (22) positioned within the container (22), arranged on the chemical solution preparation unit (14) such that the spray manifold (24) is directed to spray water toward the grid (22) of the hopper (16) to contact and dissolve solid chemicals that are arranged in the hopper (16);
a first inlet line (50) extending from the water supply line (42) and being connected to the spray manifold (24); and
a second inlet line (58) extending from the water supply line (42) and being connected to the dilution control device (26).

2. The chemical feeder according to claim 1, wherein the spray manifold (24) has a main body (68) that extends parallel to the water line (80) of the dilution control device (26).

3. The chemical feeder (10) according to claim 2, wherein the spray manifold (24) has a first arm (70) that extends in a first direction from the main body of the manifold (68) and a second arm (72) that extends in a second direction from the main body of the manifold (68).

4. The chemical feeder (10) according to claim 3, wherein the spray manifold (24) has a first nozzle (74) disposed at a distal end of the main body, a second nozzle (76) disposed at a distal end of the first arm, and a third nozzle (78) disposed at a distal end of the second arm.

5. The chemical feeder (10) according to claim 4, wherein the first nozzle (74), the second nozzle (76) and the third nozzle (78) of the spray manifold (24) are each directed away from the base of the reservoir (66).

6. The chemical feeder (10) according to claim 1, wherein the dilution control device (26) has a nozzle (82) at an end thereof that sprays water toward the base of the reservoir (66).

7. The chemical feeder (10) according to claim 1, further comprising a first check valve (62) connected to the first inlet line (50) and a second check valve (64) connected to the second inlet line (58).

8. The chemical feeder (10) according to claim 7, wherein the second check valve (64) controls the water pressure of the dilution control device (26) such that an adjustment of the second check valve (64) changes water flow from the dilution control device (26) into the reservoir (66) and thereby adjusts the concentration of the chemical solution.

9. A method for treating water via a chemical feeder (10) comprising a pump (12), a water supply line (42) extending from the pump (12), a chemical solution preparation unit (14) having a reservoir (66), a dissolution device connected to the water supply line (42), wherein the dissolution device includes a spray manifold (24) directed to spray water away from a base of the reservoir (66) and a dilution control device (26) having a water line (80) configured to spray water in a direction opposite the spray manifold (24) and toward the base of the reservoir (66), and a hopper (16) arranged on the chemical solution preparation unit (14), the method comprising the steps of:
inserting solid chemical products in the hopper (16) of the chemical feeder (10);
pumping water from the pump (12) through the water supply line (42) that is connected to a first inlet line (50) and a second inlet line (58) that extend into the chemical solution preparation unit (14);
adjusting a pressure of the water via a first valve (62) associated with the first inlet line (50) and a second valve (64) associated with the second inlet line (58), the first and second valves (62, 64) being check valves or solenoid valves;
spraying water toward the hopper (16) from the spray manifold (24) that extends from the first inlet line (50) into the reservoir (66) to dissolve the solid chemical products to form a chemical solution;
spraying water toward the base of the reservoir (66) from the dilution control device (26) that extends from the second inlet line (58) into the reservoir (66) to dilute the chemical solution; and
forming a diluted chemical solution with a solution strength that directly correlates to the pressure of the water being sprayed from the spray manifold (24) and the dilution control device (26).

10. The method according to claim 9, wherein the water pressure at the first inlet line (50) and at the second inlet line (58) is the same.

## Patentansprüche

1. Eine chemische Zuführeinheit, umfassend:
- eine Pumpe (12);
- eine Wasserversorgungsleitung (42), die sich von der Pumpe (12) aus erstreckt;
- eine Zubereitungseinheit (14) für eine chemische Lösung, mit einem Reservoir (66) und einer Auflösungseinrichtung, die an die Wasserversorgungsleitung (42) angeschlossen ist und oberhalb des Reservoirs (66) angeordnet ist, wobei die Auflösungseinrichtung einen Sprühverteiler (24) umfasst, welcher derart ausgerichtet ist, um Wasser weg von einer Basis des Reservoirs (66) zu versprühen, sowie eine Verdünnungsregeleinrichtung (26) mit einem Wasserrohr (80), welche dazu ausgelegt ist, um Wasser in eine dem Sprühverteiler (24) entgegengesetzte Richtung zu sprühen sowie in Richtung zu der Basis des Reservoirs (66);
- einen Trichter (16), welcher einen Behälter (20) umfasst sowie ein innerhalb des Behälters (20) angeordnetes Gitternetz (22), und welcher auf der Zubereitungseinheit (14) für eine chemische Lösung angeordnet ist, so dass der Sprühverteiler (24) derart ausgerichtet ist, um Wasser gegen das Gitternetz (22) des Trichters (16) zu sprühen, um mit festen Chemikalien, die sich im Trichter (16) befinden, in Kontakt zu treten und sie aufzulösen;
- eine erste Zulaufleitung (50), die sich von der Wasserversorgungsleitung (42) weg erstreckt und an dem Sprühverteiler (24) angeschlossen ist; und
- eine zweite Zulaufleitung (58), die sich von der Wasserversorgungsleitung (42) weg erstreckt und an der Verdünnungsregeleinrichtung (26) angeschlossen ist.

2. Die chemische Zuführeinheit gemäß Anspruch 1, wobei der Sprühverteiler (24) einen Grundkörper (68) aufweist, der sich parallel zu dem Wasserrohr (80) der Verdünnungsregeleinrichtung (26) erstreckt.

3. Die chemische Zuführeinheit gemäß Anspruch 2, wobei der Sprühverteiler (24) einen ersten Arm (70) aufweist, der sich in einer ersten Richtung von dem Grundkörper (68) des Sprühverteilers weg erstreckt, sowie einen zweiten Arm (72), der sich in einer zweiten Richtung von dem Grundkörper (68) des Sprühverteilers weg erstreckt.

4. Die chemische Zuführeinheit gemäß Anspruch 3, wobei der Sprühverteiler (24) eine erste Düse (74) aufweist, die an einem distalen Ende des Grundkörpers angeordnet ist, eine zweite Düse (76), die an einem distalen Ende des ersten Armes angeordnet ist, sowie eine dritte Düse (78), die an einem distalen Ende des zweiten Armes angeordnet ist.

5. Die chemische Zuführeinheit gemäß Anspruch 4, wobei die erste Düse (74), die zweite Düse (76) und die dritte Düse (78) des Sprühverteilers (24) jeweils von der Basis des Reservoirs (66) weg gerichtet sind.

6. Die chemische Zuführeinheit gemäß Anspruch 1, wobei die Verdünnungsregeleinrichtung (26) an ihrem Ende eine Düse (82) aufweist, die Wasser in Richtung zu der Basis des Reservoirs (66) sprüht.

7. Die chemische Zuführeinheit gemäß Anspruch 1, ferner umfassend ein erstes Rückschlagventil (62), das an die erste Zulaufleitung (50) angeschlossen ist, sowie ein zweites Rückschlagventil (64), das an die zweite Zulaufleitung (58) angeschlossen ist.

8. Die chemische Zuführeinheit gemäß Anspruch 7, wobei das zweite Rückschlagventil (64) den Wasserdruck der Verdünnungsregeleinrichtung (26) derart regelt, dass eine Einstellung des zweiten Rückschlagventils (64) den Wasserfluss von der Verdünnungsregeleinrichtung (26) zu dem Reservoir (66) ändert und dadurch die Konzentration der chemischen Lösung einstellt.

9. Ein Verfahren zur Wasseraufbereitung mittels einer chemischen Zuführeinheit (10), umfassend eine Pumpe (12), eine sich von der Pumpe (12) weg erstreckende Wasserversorgungsleitung (42), eine Zubereitungseinheit (14) für eine chemische Lösung mit einem Reservoir (66), eine an die Wasserversorgungsleitung (42) angeschlossene Auflösungseinrichtung, wobei die Auflösungseinrichtung einen Sprühverteiler (24) umfasst, welcher derart ausgerichtet ist, dass er Wasser von der Basis des Reservoirs (66) weg sprüht, und eine Verdünnungsregeleinrichtung (26) mit einem Wasserrohr (80), welche dazu ausgelegt ist, Wasser in eine zu dem Sprühverteiler (24) entgegengesetzte Richtung zu der Basis des Reservoirs (66) hin zu sprühen, und einen Trichter (16), der an der Zubereitungseinheit (14) für eine chemische Lösung angeordnet ist, wobei das Verfahren die folgenden Schritte umfasst:
- Einlegen von festen Chemikalien in den Trichter (16) der chemischen Zuführeinheit (10);
- Pumpen von Wasser von der Pumpe (12) durch die Wasserversorgungsleitung (42), die an einer ersten Zulaufleitung (50) sowie an einer zweiten Zulaufleitung (58) angeschlossen ist, welche sich bis in die Zubereitungseinheit (14) für eine chemische Lösung hinein erstrecken;
- Einstellen des Wasserdrucks mittels eines ersten Ventils (62), das der ersten Zulaufleitung (50) zugeordnet ist und eines zweiten Ventils (64), das der zweiten Zulaufleitung (58) zugeordnet ist, wobei das erste und das zweite Ventil (62, 64) Rückschlagventile oder Magnetventile sind;
- Sprühen von Wasser mittels des Sprühverteilers (24), der sich von der ersten Zulaufleitung (50) in das Reservoir (66) hinein erstreckt, zu dem Trichter (16), um die festen Chemikalien aufzulösen und eine chemische Lösung zu bilden;
- Sprühen von Wasser mittels der Verdünnungsregeleinrichtung (26), die sich von der zweiten Zulaufleitung (58) in das Reservoir (66) hinein erstreckt, zu der Basis des Reservoirs (66) hin, um die chemische Lösung zu verdünnen; und
- Bilden einer verdünnten chemischen Lösung mit einer Stärke der Lösung, die in einem direkten Zusammenhang mit dem Druck des Wassers steht, das von dem Sprühverteiler (24) und der Verdünnungsregelueinrichtung (26) versprüht wurde.

10. Das Verfahren gemäß Anspruch 9, wobei der Wasserdruck in der ersten Zulaufleitung (50) und in der zweiten Zulaufleitung (58) gleich ist.

## Revendications

1. Dispositif d'alimentation de produits chimiques (10) comprenant :
une pompe (12) ;
une conduite d'alimentation en eau (42) s'étendant à partir de la pompe (12) ;
une unité de préparation de solution chimique (14) ayant un réservoir (66) et un dispositif de dissolution raccordé à la conduite d'alimentation en eau (42) et disposé au-dessus du réservoir (66), dans lequel le dispositif de dissolution comprend un collecteur de pulvérisation (24) dirigé pour pulvériser l'eau à distance d'une base du réservoir (66) et un dispositif de contrôle de dilution (26) ayant une conduite d'eau (80) qui est configurée pour pulvériser l'eau dans une direction opposée au collecteur de pulvérisation (24) et vers la base du réservoir (66) ;
une trémie (16) qui comprend un récipient (20) et une grille (22) positionnée à l'intérieur du récipient (20) agencé sur l'unité de préparation de solution chimique (14) de sorte que le collecteur de pulvérisation (24) est dirigé pour pulvériser l'eau vers la grille (22) de la trémie (16) pour être en contact avec et dissoudre les produits chimiques solides qui sont agencés dans la trémie (16) ;
une première conduite d'entrée (50) s'étendant à partir de la conduite d'alimentation en eau (42) et étant raccordée au collecteur de pulvérisation (24) ; et
une seconde conduite d'entrée (58) s'étendant à partir de la ligne d'alimentation en eau (42) et étant raccordée au dispositif de contrôle de dissolution (26).

2. Dispositif d'alimentation de produits chimiques selon la revendication 1, dans lequel le collecteur de pulvérisation (24) a un corps principal (68) qui s'étend parallèlement à la conduite d'eau (80) du dispositif de contrôle de dilution (26).

3. Dispositif d'alimentation de produits chimiques (10) selon la revendication 2, dans lequel le collecteur de pulvérisation (24) a un premier bras (70) qui s'étend dans une première direction à partir du corps principal du collecteur (68) et un second bras (72) qui s'étend dans une seconde direction à partir du corps principal du collecteur (68).

4. Dispositif d'alimentation de produits chimiques (10) selon la revendication 3, dans lequel le collecteur de pulvérisation (24) a une première buse (74) disposée au niveau d'une extrémité distale du corps principal, une deuxième buse (76) disposée au niveau d'une extrémité distale du premier bras, et une troisième buse (78) disposée au niveau d'une extrémité distale du second bras.

5. Dispositif d'alimentation de produits chimiques (10) selon la revendication 4, dans lequel la première buse (74), la deuxième buse (76) et la troisième buse (78) du collecteur de pulvérisation (24) sont chacune dirigées à distance de la base du réservoir (66).

6. Dispositif d'alimentation de produits chimiques (10) selon la revendication 1, dans lequel le dispositif de contrôle de dilution (26) a une buse (82) au niveau de son extrémité qui pulvérise l'eau vers la base du réservoir (66).

7. Dispositif d'alimentation de produits chimiques (10) selon la revendication 1, comprenant en outre un premier clapet de non-retour (62) raccordé à la première conduite d'entrée (50) et un second clapet de non-retour (64) raccordé à la seconde conduite d'entrée (58).

8. Dispositif d'alimentation de produits chimiques (10) selon la revendication 7, dans lequel le second clapet de non-retour (64) contrôle la pression d'eau du dispositif de contrôle de dilution (26) de sorte qu'un ajustement du second clapet de non-retour (64) modifie l'écoulement d'eau à partir du dispositif de contrôle de dilution (26) dans le réservoir (66) et ajuste ainsi la concentration de la solution chimique.

9. Procédé pour traiter de l'eau via un dispositif d'alimentation de produits chimiques (10) comprenant une pompe (12), une conduite d'alimentation en eau (42) s'étendant à partir de la pompe (12), une unité de préparation de solution chimique (14) ayant un réservoir (66), un dispositif de dilution raccordé à la conduite d'alimentation en eau (42), dans lequel le dispositif de dilution comprend un collecteur de pulvérisation (24) dirigé pour pulvériser l'eau à distance d'une base du réservoir (66) et un dispositif de contrôle de dilution (26) ayant une conduite d'eau (80) configurée pour pulvériser l'eau dans une direction opposée au collecteur de pulvérisation (24) et vers la base du réservoir (66), et une trémie (16) agencée sur l'unité de préparation de solution chimique (14), le procédé comprenant les étapes suivantes :
insérer les produits chimiques solides dans la trémie (16) du dispositif d'alimentation de produits chimiques (10) ;
pomper l'eau de la pompe (12) en passant par la conduite d'alimentation en eau (42) qui est raccordée à une première conduite d'entrée (50) et une seconde conduite d'entrée (58) qui s'étendent dans l'unité de préparation de solution chimique (14) ;
ajuster une pression de l'eau via une première valve (62) associée avec la première conduite d'entrée (50) et une seconde valve (64) associée à la seconde conduite d'entrée (58), les première et seconde valves (62, 64) étant des clapets de non-retour ou des électrovalves ;
pulvériser l'eau sur la trémie (16) à partir du collecteur de pulvérisation (24) qui s'étend à partir de la première conduite d'entrée (50) dans le réservoir (66) pour dissoudre les produits chimiques solides afin de former une solution chimique ;
pulvériser l'eau vers la base du réservoir (66) à partir du dispositif de contrôle de dilution (26) qui s'étend à partir de la seconde conduite d'entrée (58) dans le réservoir (66) pour diluer la solution chimique ; et
former une solution chimique diluée avec une résistance de solution qui établit directement une corrélation avec la pression de l'eau qui est pulvérisée à partir du collecteur de pulvérisation (24) et le dispositif de contrôle de dilution (26).

10. Procédé selon la revendication 9, dans lequel la pression d'eau au niveau de la première conduite d'entrée (50) et au niveau de la seconde conduite d'entrée (58) est la même.
